# EUROPÄISCHE PATENTSCHRIFT

(11) **EP 2 371 890 B1**
(45) Veröffentlichungstag und Bekanntmachung des Hinweises auf die Patenterteilung: **12.12.2012**
(21) Anmeldenummer: 11151581.3
(22) Anmeldetag: 16.07.2008
(51) Int. Cl.: C08K 5/5317, C08K 5/3492, C08K 5/5353, C08G 79/02

(54) **Phosphorhaltige Triazin-Verbindungen als Flammschutzmittel**
Triazine compounds containing phosphorus as flame retardants
Composés de triazine phosphorés en tant qu'agents ignifugeants

(30) Priorität: 01.08.2007 DE 102007036465
(43) Veröffentlichungstag der Anmeldung: 05.10.2011
(62) Teilanmeldung aus: 08784803.2
(73) Patentinhaber: CATENA Additives GmbH & Co. KG, 64665 Alsbach-Hähnlein (DE)
(72) Erfinder: Wehner, Wolfgang, 64673 Zwingenberg (DE); Dave, Trupti, 64673 Zwingenberg (DE)
(74) Vertreter: Büchel, Edwin

(56) Entgegenhaltungen:
- EP-A1- 1 116 773
- EP-A2- 1 095 975
- WO-A1-2005/052031
- DE-A1- 3 622 840
- DATABASE WPI Week 200745 Thomson Scientific, London, GB; AN 2007-461808 XP002649572, -& JP 2007 070615 A (POLYPLASTICS KK) 22. März 2007 (2007-03-22)

## Beschreibung

Die vorliegende Erfindung betrifft phosphorhaltige Triazin-Verbindungen, deren Verwendung als Flammschutzmittel und Polymere enthaltend die Verbindungen.

Metallphosphonate sind für sich oder in Kombination mit anderen Komponenten für eine große Anzahl von thermoplastischen Polymeren bekannt.

Stickstoffhaltige Flammschutzmittel, insbesondere auf Melamin-Basis sind seit langem bekannt und z. T. auch kommerziell erhältlich. Einige dieser Melamin-Verbindungen enthalten außerdem Phosphor.

In US-A 5 684 071 sind Melamin-Salze von Nitrilo(amino)trimethanphosphonsäure (NTMPA) als Flammschutzmittel allgemein beschrieben. Trimelamin- und Hexamelamin-NTMPA-Salz sind beschrieben in EP-A 1 116 773. In EP-A 1 116 772 hingegen werden Trimagnesium- Trikalzium- und Trizink-nitrilo(amino)trimethanphosphonat als Flammschutzmittelkomponenten beschrieben.

Trotz der zahlreichen im Stand der Technik bekannten Flammschutzmittel besteht weiterhin ein Bedarf an Flammschutzmitteln mit optimierten Eigenschaften und verbesserter Umweltverträglichkeit.

Eine Aufgabe der vorliegenden Erfindung liegt somit in der Bereitstellung solcher Flammschutzmittel.

Die Aufgabe wird gelöst durch ein Polymer erhältlich aus der Wasser abspaltenden Polykondensation einer monomeren Verbindung der Formel (II) 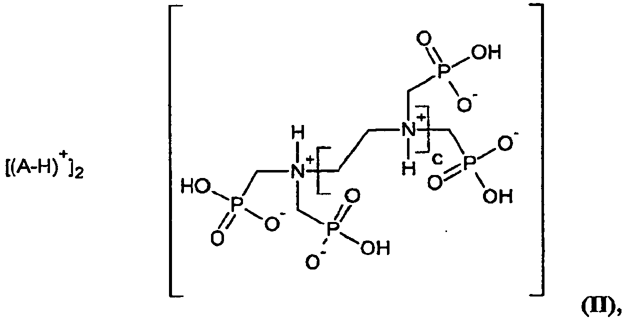 wobei
(A-H)⁺ ein Rest der Formel (IV) 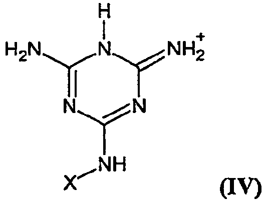 ist, in der **X** H, CN, C(NH)NH₂, C(O)NH₂, C(NH)NHCN ist oder dessen Kondensationsprodukt;
**c** 0, 1, 2 oder 3 ist;
oder dessen Salz.

Bei Verbindungen der Formel (II) tritt ein Rest [(A-H)⁺] auf, der der Formel (IV) entspricht und ionischer Natur ist. Die deprotonierte Grundform entspricht für X = H Melamin. Die Reste werden entsprechend ihrer Grundformen in Verbindungen der Formeln (II) eingebracht. Hierbei können diese selbst oder Kondensationsprodukte dieser unter Ammoniak-Abspaltung eingesetzt werden. Im Fall des Melamins sind diese beispielsweise Melam, Melem oder Melon. Bevorzugt ist X = H.

Verbindungen der Formel (II) leiten sich weiterhin aus Aminomethanphosphonsäuren ab und können Ethylenammonium-Einheiten (c ist von Null verschieden) enthalten. Solche

Verbindungen können auf einfache Weise aus Ethylendiamin, Formaldehyd und phosphorige Säure oder Phosphiten hergestellt werden. Eine solche Herstellung ist beispielsweise in J. Org. Chem. (1966), 1603-1607 beschrieben.

Vorzugsweise ist c in den obigen Formeln 0 oder 1.

Bei Verbindungen der Formel (II) handelt es sich um Polymere, welche durch einfache thermische Dehydratisierung aus an sich bekannten Monomeren erhalten werden können oder es handelt sich um deren Salze, bei denen verbleibende OH-Gruppen unter Deprotonierung mit Kationen Salze bilden. Vorzugsweise handelt es sich bei den Kationen um solche der Formel (A-H)⁺, insbesondere um Melaminium.

Bei den oben dargestellten chemischen Formeln handelt es sich um Grenzformeln, welche die Reste in ionischem Zustand darstellen. Dies muss jedoch nicht der tatsächlichen Ladungsverteilung entsprechen. Darüber hinaus können auch tautomere Formen der oben dargestellten Strukturen auftreten und werden im Rahmen der vorliegenden Erfindung mit umfasst.

Verbindungen der Formel (II) sind beispielsweise die folgenden Derivate. Hierbei ist bevorzugt, dass die Polymere aus 2, 3, 4, 5 oder 6 Monomeren gebildet werden. Bei den Verbindungen (54) bis (57) handelt es sich um Salze, bei denen die OH-Gruppen nur teilweise unter Abspaltung von Wasser eine -O- Brücke bilden und die restlichen OH-Gruppen mit Melamin die entsprechenden Melaminium-Salze bilden.

Pyro-aminomethanphosphonsäure-Derivate:

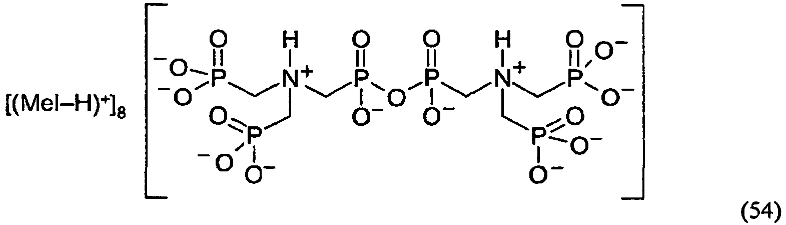

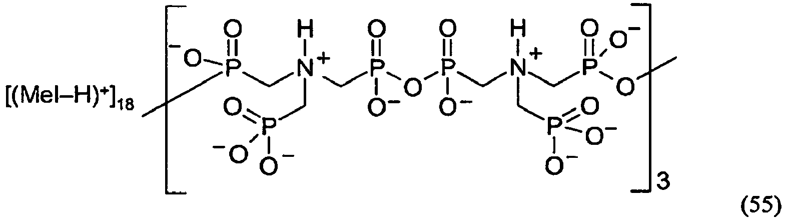

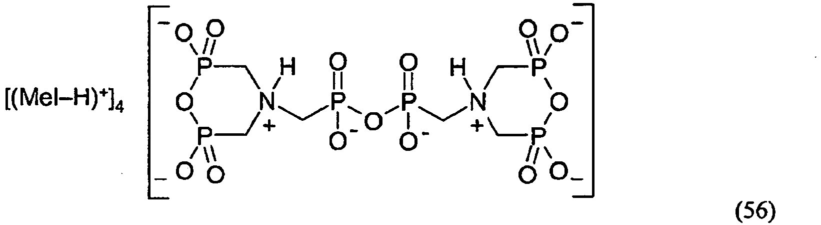

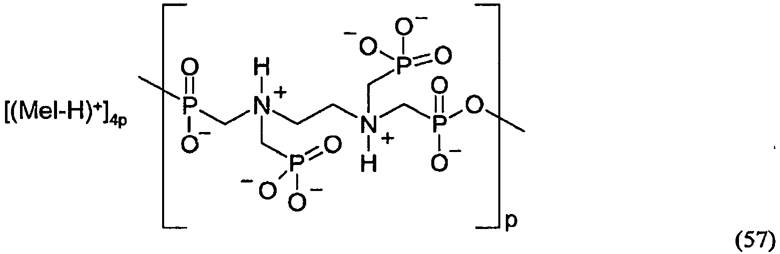

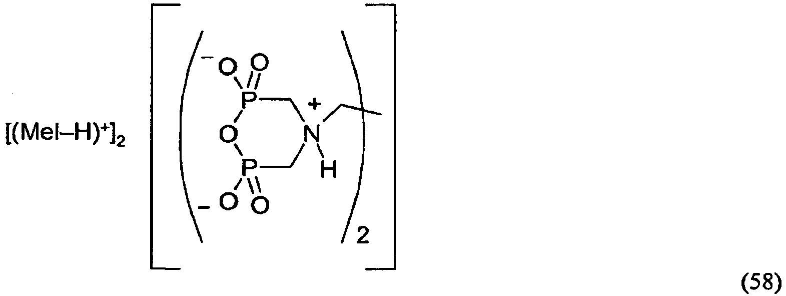

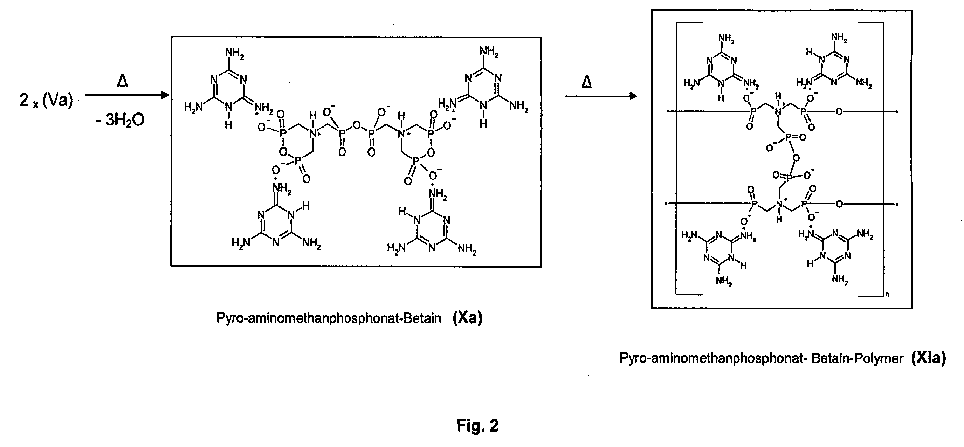

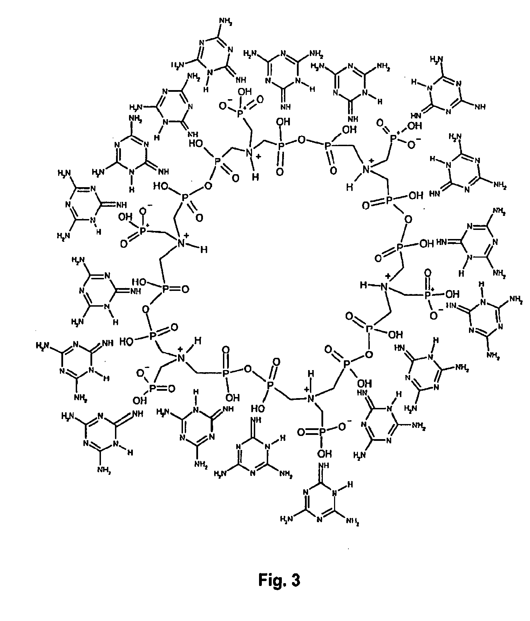

Weitere Polymere ausgehend aus Verbindungen der Formel (**II**) und Reaktionen, um solche Polymere herzustellen sind in Fig. 2 und Fig.3 dargestellt.

Bevorzugt sind: 54, 55 und 56.

Die Verbindungen 54 bis 58 (Kategorie c) enthalten Pyro-aminomethanphosphonat-Anionen mit ternären Ammonium-Phosphonat-Betain-Strukturen.

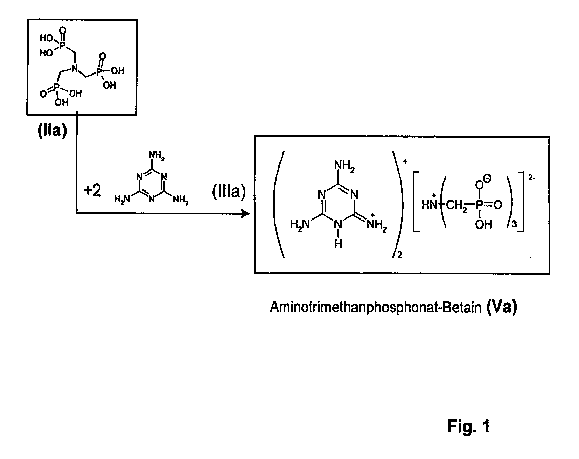

Die Synthese der Verbindungen der Kategorie c) kann gemäß Fig. 1 erfolgen.

Es erfolgt eine Partialumsetzung zum Melamin-Aminomethanphosphonat **(Va)**, das filtriert, gewaschen und getrocknet wird (s. Beispiel 1).

Die Synthese der Verbindungen nach Kategorie c) erfolgt weiterhin gemäß Fig. 2Partialaminomethanphosphonate **(Va)** - s. Beipiel 1, werden durch mehrstündiges Erhitzen auf 220 °C in monomere Pyro-aminomethanphosphonate **(Xa)** überführt, aus denen im Anschluß durch Tempern bei 250 - 260 °C polymere Pyro-aminomethanphosphonate (XIa) entstehen (s. Beispiel 2).

Die erfindungsgemäßen Flammschutzmittel sind bestens geeignet, synthetischen, insbesondere thermoplastischen Polymeren, Flammschutzeigenschaften zu verleihen.

Ein Gegenstand der vorliegenden Erfindung ist die Verwendung einer erfindungsgemäßen Verbindung als Flammschutzmittel in einem Polymer, vorzugsweise einem Thermoplast, insbesondere einem Polyamid, Polyurethan, Polystyrol, Polyolefin oder Polyester oder einem Duroplast, insbesondere Epoxidharz.

Dementsprechend ist ein weiterer Gegenstand der vorliegenden Erfindung ein Polymer enthaltend eine erfindungsgemäße Verbindung. Selbstverständlich können auch mehrere erfindungsgemäße Verbindungen eingesetzt werden.

Darüber hinaus kann das Polymer weitere von den erfindungsgemäßen Verbindungen verschiedene Verbindungen enthalten. Hierbei seien beispielsweise Melamin, Melaminiumphosphat oder Melamincyanurat.

Eine bevorzugte Ausführungsform der vorliegenden Erfindung betrifft daher Polymer zusätzlich enthaltend mindestens eine der Verbindungen ausgewählt aus der Gruppe bestehend aus Melamin, Melaminiumphosphat und Melamincyanurat.

Beispiele für solche synthetische Polymere sind:
1. Polymere von Mono- und Diolefinen, z.B. Polypropylen, Polyisobutylen, Polybuten-1, Poly-4-methylpenten-1, Polyvinylzyklohexan, Polyisopren oder Polybutadien und Polymerisate von Zykloolefinen, z.B. von Zyklopenten oder Norbornen und Polyethylen (auch vernetzt), z.B. High Density Polyethylen (HDPE) oder High Molecular Weight (HDPE-HMW), High Density Polyethylen mit Ultra-High Molecular Weight (HDPE-UHMW), Medium Density Polyethylen (MDPE), Low Density Polyethylen (LDPE) und Linear Low Density Polyethylen (LLDPE), (VLDPE) und (ULDPE).
2. Polystyrole, Poly(p-methylstyrol), Poly(α-methylstyrol).
3. Kopolymere sowie Propfkopolymere von Polybutadien-Styrol oder Polybutadien und (Meth)Acrylnitril wie z.B. ABS und MBS.
4. Halogenhaltige Polymere z.B. Polychloropren, Polyvinylchlorid (PVC), Polyvinylidenchlorid (PVDC), Kopolymere von Vinylchlorid/Vinylidenchlorid, Vinylchlorid/Vinylacetat oder Vinylchlorid/Vinylacetat.
5. Poly(meth)acrylate, Polymethylmethacrylate (PMMA), Polyacrylamid und Polyacrylnitril (PAN).
6. Polymere von ungesättigten Alkoholen und Aminen oder ihren Azylderivaten bzw. Azetalen, wie z.B. Polyvinylalkohol (PVA), Polyvinylazetate, -stearate, -benzoate oder maleate, Polyvinylbutyral, Polyallylphthalate und Polyallylmelamine.
7. Homo- und Kopolymere von zyklischen Ethern, wie Polyalkylenglykole, Polyethylenoxide, Polypropylenoxide und deren Kopolymere mit Bisglyzidylethern.
8. Polyazetale, wie Polyoxymethylene (POM) sowie Polyurethan und Acrylat modifizierte Polyazetale
9. Polyphenylenoxide und -sulfide und deren Gemische mit Styrolpolymeren oder Polyamiden
10. Polyamide und Kopolyamide hergeleitet von Diaminen und Dikarbonsäuren und/oder von Aminokarbonsäuren oder den entsprechenden Laktamen, wie z.B. Polyamid 4, Polyamid 6, Polyamid 6/6, 6/10, 6/9, 6/12, 12/12, Polyamid 11, Polyamid 12, aromatische Polyamide hergeleitet vom m-Xylylendiamin und Adipinsäure und Kopolyamide modifiziert mit EPDM oder ABS. Beispiele von Polyamiden und Kopolyamiden sind hergeleitet von ε-Kaprolaktam, Adipinsäure, Sebacinsäure, Dodekansäure, Isophthalsäure, Terephthalsäure, Hexamethylendiamin, Tetramethylendiamin, 2-Methylpentamethylendiamin, 2,2,4-Trimethylhexamehthylendiamin, 2,4,4-Trimethylhexamethylendiamin, m-Xylylendiamin oder Bis(3-Methyl-4-aminozyklohexyl)methan.
11. Polyharnstoffe, Polyimide, Polyamidimide, Polyetherimide, Polyesterimide, Polyhydantoine und Polybenzimidazole.
12. Polyester hergeleitet von Dikarbonsäuren und Dialkoholen und/oder Hydroxykarbonsäuren oder den entsprechenden Laktonen, wie z.B. Polyethylenterephthalat, Polypropylenterephthalat, Polybutylenterephthalat, Poly-1,4-dimethylzyklohexanterephthalat, Polyalkylennaphthalat (PAN) und Polyhydroxybenzoate, Polymilchsäureester und Polyglykolsäureester.
13. Polykarbonate und Polyesterkarbonate
14. Polyketone.
15. Mischungen bzw. Legierungen von o.g. Polymeren z.B. PP/EPDM, PA/EPDM oder ABS, PVC/EVA, PVC/ABS, PBC/MBS, PC/ABS, PBTP/ABS, PC/AS, PC/PBT, PVC/CPE, PVC/Acrylat, POM/thermoplastisches PUR, PC/thermoplastisches PUR, POM/Acrylat, POM/MBS, PPO/HIPS, PPO/PA6.6 und Kopolymere, PA/HDPE, PA/PP, PA/PPO, PBT/PC/ABS oder PBT/PET/PC.
16. Duroplaste wie PF, MF oder UF oder Mischungen davon
17. Epoxidharze - Thermoplaste und Duroplaste
18. Phenoxyharze
19. Wood-Plastic-Composites (WPC)

Die Konzentration des beanspruchten Flammschutzmittels in dem Polymer beträgt vorzugsweise 0,1 bis 60 Gew.-% bezogen auf das zuverarbeitende Polymer.

Das Flammschutzmittel kann z.B. durch Vormischung in Form von Pulver und/oder Granulat in einem Mixer und dann durch Homogenisieren in einer Polymerschmelze durch Kompoundieren (u. a. in einem Doppelschneckenextruder) hergestellt werden. Das Flammschutzmittel kann evtl. auch bei der Verarbeitung direkt zugegeben werden.

Das so flammgeschütze Material kann zu Fasern, Folien, Gussartikeln verarbeitet sowie zur Behandlung von Oberflächen verwendet werden.

Das Flammschutzmittel kann auch zur Oberflächenbehandlung (Imprägnierung) von Fasern, Folien, Textilien oder andere technische Materialien verwendet werden.

Durch Coating von Metalloberflächen kann auch ein antikorrosiver Schutzeffekt erzielt werden.

Die erfindungsgemäßen Polymerzubereitungen können mit weiteren bekannten Synergisten und Co-Komponenten wie Aryl- oder Chloralkylphosphatestem, Arylendiphosphatestern, Bisphenol-A (F)-diphosphatestern, polymerne Arylphosphatestern, Bis-Azin-pentaerythritdiphosphat-Salzen, Hexa-aryloxy-triphosphazenen, Poly-aryloxyphosphazenen und Siloxanen (R₂SiO)ᵣ oder (RSiO_{1,5})ᵣ, insbesondere POSS-Verbindungen (Polyhedral Oligomeric SilSesquioxanes) sowie Metallphosphinaten oder Metallhypophosphiten (Metall: Mg, Ca, Zn und Al) oder den Kohlenstofibildnern wie Pentaerythrit, Dipentaerythrit und Tripentaerythrit bzw. deren Estern oder Promotoren hierfür ausgerüstet werden.

Folgende Zusatzstoffe seien weiterhin benannt:
Metallhydroxide, beispielsweise Aluminium- oder Magnesiumhydroxid, Metallborate, wie beispielsweise Kalzium-, Magnesium-, Mangan- oder Zinkborate. Metalloxide wie Magnesium-, Aluminium-, Mangan-, Zink und Antimonoxid oder Titandioxid, Siliziumdioxid; Metallphosphate wie beispielsweise Magnesium-, Kalzium- , Zink- und Aluminiumphosphat; Tonmineralien wie Kaolinit, Muskovit, Pyrophyllit, Bentonit und Talk oder andere Mineralien wie Wollastonit, Quarz, Glimmer, Feldspat bzw. mineralische Anionenaustauscher wie Hydrotalzite oder andere Magnesium-Aluminium-Hydroxokarbonate oder Kalzium-Aluminium-Hydroxokarbonate enthalten.

Als Schaumbildner seien genannt: Melamin, Melaminformaldehydharze, Melaminzyanurat, Melaminpolyphosphat; Harnstoffderivate wie Harnstoff, Thioharnstoff, Guanamine, Benzoguanamin, Azetoguanamin und Succinylguanamin, Dizyandiamid, Guanidin und Guanidinsulfamat sowie andere Guanidinsalze bzw. Allantoine, Glykolurile und Isozyanursäure-tris-hydroxyethylester.

Die erfindungsgemäßen Polymerzubereitungen können desweiteren Antidripping-Mittel, insbesondere auf Polytetrafluoroethylen-Basis enthalten. Die Konzentration solcher Antidrippingmittel beträgt 0,01 bis 15 Gew.-% bezogen auf das zuverarbeitende Polymer.

Zusätzlich können den Formulierungen weitere Komponenten zugegeben werden, z.B. Füllstoffe und Verstärkungsmittel, wie Glasfasern, Glasperlen oder mineralische Zusätze wie Kreide. Als weitere Additive können Antioxidantien, Lichststabilisatoren, Gleitmittel, Pigmente, Nukleierungsagentien und Antistatika.

### Beispiele

### Beispiel 1 - Vorstufe

Herstellung von Bis-Melaminium-trihydrogen-aminotrimethanphosphonat -Betain **(Va**): Zu einer wäßrigen Lösung, enthaltend 89,7g (0,3Mol) Aminotrimethanphosphonsäure **(IIa)** (Dequest 2000, 50 %ige Lösung der Fa. SOLUTIA), werden 75,7g (0,6Mol) Melamin **(IIIa)** unter Rühren und Erwärmen portionsweise zugegeben. Nach wenigen Minuten bildet sich ein voluminöser weißer Niederschlag, der abgesaugt und bis zur Gewichtkonstanz getrocknet wird. Ausbeute: 155g (ca 94% d.Th.); Fp: > 300 °C

### Beispiel 2 - erfindungsgemäß

Durch Erhitzen von (**Va**) auf 200 - 220 °C ist das Pyro-aminomethanphosphonat-Betain (**Xa**) zugänglich, aus dem durch mehrstündiges Tempern bei 230 - 250 °C polymeres Pyro-aminomethanphosphonat- Betain **(XIa)** entsteht.

## Patentansprüche

1. Polymer erhältlich aus der Wasser abspaltenden Polykondensation einer monomeren Verbindung der Formel **(II)** 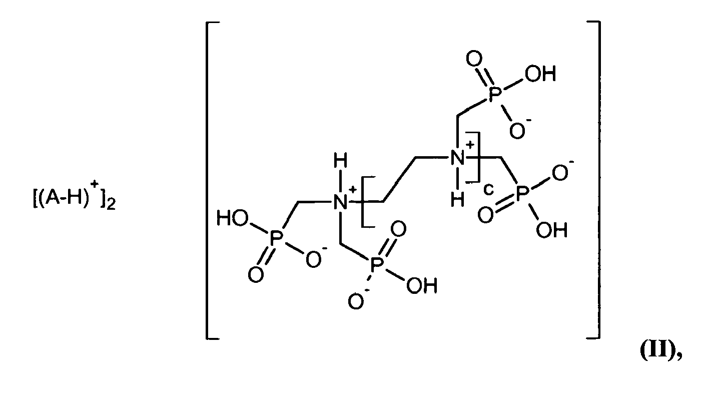 wobei
**(A-H)⁺** ein Rest der Formel (**IV**) 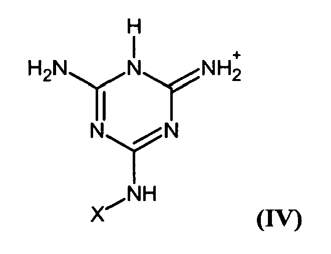 ist, in der **X** H, CN, C(NH)NH₂, C(O)NH₂, C(NH)NHCN ist oder dessen Kondensationsprodukt;
**c** 0, 1, 2 oder 3 ist
oder dessen Salz.

2. Verbindung nach Anspruch 1, **dadurch gekennzeichnet, dass** c 0 oder 1 ist.

3. Verbindung nach Anspruch 1 oder 2, **dadurch gekennzeichnet, dass** X in Formel (IV) H ist.

4. Verwendung einer Verbindung nach einem der Ansprüche 1 bis 3 als Flammschutzmittel in einem Polymer.

5. Verwendung nach Anspruch 4, **dadurch gekennzeichnet, dass** das Polymer ein Thermoplast oder Duroplast ist.

6. Verwendung nach Anspruch 5, **dadurch gekennzeichnet, dass** der Thermoplast ein Polyamid, Polyurethan, Polystyrol, Polyolefin oder Polyester und der Duroplast ein Epoxidharz ist.

7. Polymer enthaltend eine Verbindung nach einem der Ansprüche 1 bis 3.

8. Polymer nach Anspruch 7 zusätzlich enthaltend mindestens eine der Verbindungen ausgewählt aus der Gruppe bestehend aus Melamin, Melaminiumphosphat und Melamincyanurat.

## Claims

1. A polymer obtainable from the water-eliminating polycondensation of a monomeric compound of the formula (II) 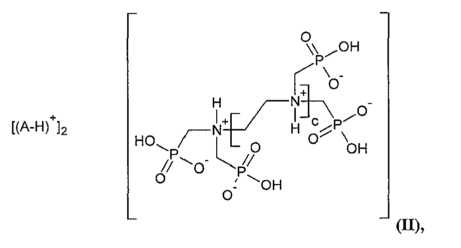 where
**(A-H)⁺** is a radical of the formula (IV) 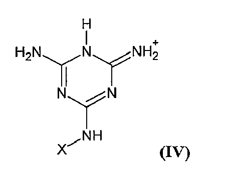 in which X is H, CN, C(NH)NH₂, C(O)NH₂, C(NH)NHCN, or a condensation product thereof;
c is 0, 1, 2 or 3
or a salt thereof.

2. Compound according to claim 1, **characterized in that** c is 0 or 1.

3. Compound according to claim 1 or 2, **characterized in that** X in formula (IV) is H.

4. Use of a compound according to any of claims 1 to 3 as a flame retardant in a polymer.

5. Use according to claim 4, **characterized in that** the polymer is a thermoplastic or thermoset.

6. Use according to claim 5, **characterized in that** the thermoplastic is a polyamide, polyurethane, polystyrene, polyolefin or polyester, and the thermoset is an epoxy resin.

7. Polymer containing a compound according to any of claims 1 to 3.

8. Polymer according to claim 7, additionally containing at least one of the compounds selected from the group consisting of melamine, melaminium phosphate and melamine cyanurate.

## Revendications

1. Polymère pouvant être obtenu par la polycondensation avec clivage d'eau d'un composé monomère de formule (II) 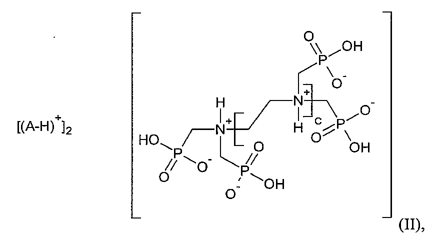 dans laquelle
(A-H)⁺ est un radical de formule (IV) 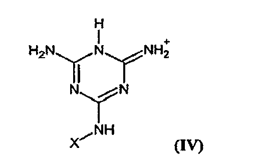 dans laquelle X est H, CN, C(NH)NH₂, C(O)NH₂, C(NH)NHCN, ou son produit de condensation;
c est 0, 1, 2 ou 3,
ou son sel.

2. Composé selon la revendication 1, **caractérisé en ce que** c est 0 ou 1.

3. Composé selon la revendication 1 ou 2, **caractérisé en ce que** X dans la formule (IV) est H.

4. Utilisation d'un composé selon l'une quelconque des revendications 1 à 3 en tant qu'agent ignifuge dans un polymère.

5. Utilisation selon la revendication 4, **caractérisée en ce que** le polymère est un thermoplaste ou un duroplaste.

6. Utilisation selon la revendication 5, **caractérisée en ce que** le thermoplaste est un polyamide, un polyuréthane, un polystyrène, une polyoléfine ou un polyester et le duroplaste est une résine époxyde.

7. Polymère contenant un composé selon l'une quelconque des revendications 1 à 3.

8. Polymère selon la revendication 7, contenant également au moins un des composés choisis dans le groupe constitué par la mélamine, le phosphate de mélaminium et le cyanurate de mélamine.
